# EUROPEAN PATENT APPLICATION

(11) **EP 4 579 617 A1**
(43) Date of publication of application: **02.07.2025**
(21) Application number: 24176569.2
(22) Date of filing: 17.05.2024
(51) Int. Cl.: G06V 20/58, G06V 10/25, B60W 40/06, G06V 10/26

(54) **METHOD FOR ESTIMATING A GEOMETRIC PROPERTY OF A DEPRESSION IN A ROAD SURFACE, METHOD FOR CONTROLLING A VEHICLE, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: MORALES, Gerardo, 40531 Göteborg (SE); PEREZ BARRERA, Oswaldo, 40531 Göteborg (SE)
(74) Representative: Maiwald GmbH

(57) **Abstract**

The disclosure relates to a method for estimating a geometric property (P) of a depression (32) in a road surface (14) in a surrounding of a vehicle (10). The method comprises obtaining first data (D1) indicative of the road surface (14) comprising the depression (32) and indicative of a circumference of the depression (32), obtaining second data (D2) indicative of a brightness of at least a portion of the first data (D1) representing an interior of the depression (32), and estimating a geometric property (P) of the depression (32) based on the second data (D2). The disclosure also relates to a method for controlling a vehicle (10). Moreover, the disclosure is directed to a data processing apparatus (22) comprising means for carrying out any of said methods. Furthermore, the disclosure is directed to a computer program (30) and a computer-readable storage medium (28) comprising instructions which, when executed by a computer, cause the computer to carry out any of said methods.

## Description

### TECHNICAL FIELD

The present disclosure relates to a method for estimating a geometric property of a depression in a road surface in a surrounding of a vehicle.

Moreover, the present disclosure relates to a method for controlling a vehicle.

Furthermore, the present disclosure is directed to data processing apparatus, a computer program, and a computer-readable storage medium.

### BACKGROUND ART

A surface of a road on which a vehicle is travelling may comprise a depression.

The depression may be due to frost that has impacted the surface of the road and that has locally affected the surface of the road open. In such a case, the depression is sometimes called a pothole.

Depending on the geometric properties of the depression, the depression may cause damages of varying extent to the vehicle if the vehicle bumps into the depression while travelling. Additionally and also depending on the geometric properties of the depression, the depression may affect the driving of the vehicle in an undesired manner.

### SUMMARY

It is therefore an objective of the present invention to provide a method for estimating a geometric property of a depression in a road surface.

The problem is at least partially solved or alleviated by the subject matter of the independent claims of the present disclosure, wherein further examples are incorporated in the dependent claims.

According to a first aspect, there is provided a method for estimating a geometric SE:TOP property of a depression in a road surface in a surrounding of a vehicle. The method comprises:
- obtaining first data indicative of the road surface comprising the depression and indicative of a circumference of the depression,
- obtaining second data indicative of a brightness of at least a portion of the first data representing an interior of the depression, wherein the second data is obtained based on the first data, and
- estimating a geometric property of the depression based on the second data.

The depression in the road surface is understood as a portion of the road surface being locally retracted with respect to the surrounding portions of the road surface. An example of such a depression in the road surface may be a so-called pothole. Moreover, the term obtaining means determining or receiving. An interior of the depression is understood as a portion of the depression located within the circumference of the depression. The circumference of the depression is a line delimiting the depression with respect to the adjacent portions of the road and may be determined from the first data by an appropriate data processing method, e.g. an object detection method. The data processing method may comprise using one or more neural networks, for example one or more of a convolutional neural network, a generative adversarial network or the like. The first data may comprise image data, e.g. provided by an optical camera. Additionally or alternatively, the first data may comprise lidar data provided by a lidar unit. The fact that the first data is indicative of the road surface comprising the depression means that the first data comprises a representation of the road surface comprising the depression. The fact that the first data is indicative of the circumference of the depression means that the first data comprises a representation of the circumference of the depression. In this context, the representation of the circumference of the depression may be separate from the representation of the road surface or the representation of the circumference may be at least identifiable with respect to the representation of the road surface. The present method uses the phenomenon that a brightness of a representation of an interior of the depression usually differs from a brightness of the representation of the road surface adjacent to the depression. This is due to the fact that the depression is locally retracted with respect to the surrounding portions of the road surface. Thus, the second data indicative of a brightness of at least a portion of the first data representing the interior of the depression is a reliable basis for estimating a geometric property of the depression. Moreover, due to the fact that data indicative of a brightness may be provided by comparatively simple, robust and reliable sensors, estimating the geometric property of the depression thereon also is comparatively simple, robust and reliable. Furthermore, estimating the geometric property of the depression may be used as a basis for an appropriate reaction of the vehicle to the depression in the road surface. Thus, estimating the geometric property of the depression forms a basis for avoiding or mitigating undesired damage of the vehicle and/or undesired effects on the driving behavior of the vehicle. This also enhances road safety.

According to an example, estimating a geometric property of the depression based on the second data may involve comparing the second data to a standard brightness value that is predefined. The standard brightness value may be a fixed value. Alternatively, the standard brightness value may depend on a current daytime and/or on current weather conditions. In this context, the current weather conditions may be obtained from a cloud server providing a weather forecast or by an environment detection sensor of the vehicle. Using such a standard brightness value enhances the precision of the estimation of a geometric property of the depression.

The method according to the present disclosure may be performed by a vehicle or from the perspective of a vehicle, wherein the method is triggered by this vehicle. Alternatively, the method may be triggered by another vehicle. In other words, the other vehicle may be asking for help in estimating a geometric property of the depression in the road surface.

In an example, the geometric property is indicative of one or more of
- a depth of the depression,
- a diameter of the depression,
- a length of the depression, and
- a width of the depression.

The depth of the depression is to be understood as a maximum distance between the road surface and the deepest point of the interior of the depression. The depth is measured in a direction that is oriented perpendicularly to the road surface. A diameter of the depression is the maximum distance between two points on a circumference or on an edge of the depression. The edge of the depression is an imaginary line that separates the road surface and the depression. In case of a pothole, the edge of the depression is typically the break-off edge of the road surface, e.g. formed by an asphalt layer or a concrete layer. The length of the depression is to be understood as the maximum distance between two points on the circumference of the depression, wherein the distance is measured in parallel to a driving direction of the vehicle. Similarly, the width of the depression is to be understood as the maximum distance between two points on the circumference of the depression, wherein the distance is measured perpendicularly to the driving direction of the vehicle. Said examples of geometric properties are indicative of relevant geometric aspects of the depression. Thus, an accurate basis for a reaction of the vehicle to the depression is provided. For example, an evasive maneuver of the vehicle may be based on a depression which is estimated to be deeper than a predefined depth threshold. However, the evasive maneuver may still not be required if the width of the depression is estimated to be inferior to a predefined width threshold, e.g. corresponding to a width of a tire of the vehicle. Also, the evasive maneuver may not be required if the length and/or the diameter of the depression is/are estimated to be inferior to a predefined length threshold and/or a predefined diameter threshold. Altogether, the above-mentioned parameters may not only be considered individually, but also in combination. Thus, the accuracy of the basis for an appropriate reaction of the vehicle is further enhanced.

In an example, the first data is image data or lidar data. In case the first data is image data, the first data may be provided by an environment detection sensor of the vehicle which comprises an optical camera. The optical camera may be a monochromatic camera acquiring monochromatic image data or a camera that acquires colored image data. The image data may comprise an individual image or a sequence of images, such as a video sequence. Image data indicative of the road surface is a reliable way of representing the road surface and the depression in the road surface. In case the first data is lidar data, the first data may be provided by an environment detection sensor of the vehicle which comprises a lidar sensor. Usually, lidar data is provided in the form of a point cloud, wherein additional parameters may be provided for each point of the point cloud, e.g. characterizing brightness. Also lidar data indicative of the road surface is a reliable way of representing the road surface and the depression in the road surface.

In an example, obtaining the second data comprises discretizing the first data. Discretizing a colored image may involve converting it into a greyscale image. When transforming a color image into a greyscale image, intensity values provided for each color in each pixel, e.g. for red, green and blue, if the image is represented in a so-called RGB space, are aggregated into a single intensity value per pixel. This single intensity value represents the greyscale. Discretizing may also be understood in the sense of binarizing. A binarized image only comprises two colors, e.g. black and white. For example, a monochromatic image or a grayscale image may be binarized through a comparison of each pixel intensity value with a threshold intensity value. Depending on whether a pixel intensity value reaches and/or exceeds the threshold intensity value or not, the intensity value of the respective pixel may be set to one or zero in a corresponding binary image. For the ease of understanding, a binary image is often displayed as a black-white image. Discretizing may also mean applying an inverse binarization. In this case, the value of the respective pixel in the binary image is set to zero if the corresponding pixel reaches and/or exceeds the threshold value. Otherwise, the value of the respective pixel in the binary image is set to one. Providing discretized and/or binarized data allows a further processing of the first data at reduced computational effort compared to non-discretized or non-binarized first data. Still, the discretized or binarized data comprises an information on brightness. Due to the discretized or binarized nature, evaluating the brightness information is easier and quicker than for non-discretized or non-binarized data.

In an example, obtaining the second data comprises applying at least one brightness threshold to at least the portion of the first data representing an interior of the depression. In other words, characteristics of elements of the second data, e.g. characteristics of pixels or characteristics of points of a point cloud, are compared to the brightness threshold. Applying the brightness threshold only to the portion of the first data representing the interior of the depression saves computational resources. Following the application of the brightness threshold, the data representing an interior of the depression may be classified in one or more of a class relating to a brightness lower than the brightness threshold, a class relating to a brightness equaling the brightness threshold and a class relating to a brightness exceeding the brightness threshold. This facilitates estimating a geometric property of the depression based on the second data.

In an example, obtaining the second data further comprises determining a brightness threshold limit, wherein the brightness threshold limit defines a brightness associated with switching between visibility and non-visibility of the interior of the depression based on the first data. In other words, a brightness threshold is determined which defines a brightness associated with switching between visibility and non-visibility of the interior of the depression based on the first data. This brightness threshold is the brightness threshold limit. Thus, on one side of the brightness threshold limit, i.e. below or above, the interior of the depression is visible and on the other side of the brightness threshold limit, i.e. above or below, the interior of the depression is not visible based on the first data. Based on the brightness threshold limit, the geometric property may be estimated based on a limit case in which the interior of the depression is still visible based on the first data. This implies that at least a substantial portion of noise is eliminated from the first data. Consequently, the estimation of the geometric property is highly precise.

According to an example, determining the brightness threshold limit involves applying a plurality of brightness thresholds to at least the portion of the first data representing an interior of the depression. The brightness thresholds of the plurality of brightness thresholds may be applied to at least the portion of the first data representing the interior of the depression in an increasing or in a decreasing order. An increasing order of brightness thresholds means that the first brightness threshold applied to the portion of the first data representing the interior of the depression is smaller, i.e. relates to a lower brightness, than the further brightness thresholds applied to the respective portion of the first data. A decreasing order of brightness thresholds means that the first brightness threshold applied to the portion of the first data representing the interior of the depression is larger, i.e. relates to a higher brightness, than the further brightness thresholds applied to the respective portion of the first data. Subsequently applying a plurality of brightness thresholds to the first data may be called sweeping the first data. Irrespective of the brightness thresholds being applied in an increasing or in a decreasing order, that brightness threshold at which all pixels of the portion of the first data representing the interior of the depression share the same value after binarization is considered the brightness threshold limit if the brightness threshold applied before did not result in all pixels of the portion of the first data representing the interior of the depression sharing the same value. In other words, if all pixels of the portion of the first data representing the interior of the depression share the same value in a binary image, the depression is not visible in the binary image. If all pixels of the portion of the first data representing the interior of the depression do not share the same value in a binary image, the depression is visible in the binary image. Thus, applying a plurality of brightness thresholds helps finding the brightness threshold limit which equals to the brightness threshold at which the depression in the road surface switches from visible to not visible in the binary image. Altogether, the brightness threshold limit may be determined reliably and precisely.

In an example, estimating the geometric property comprises comparing the brightness threshold limit to a nominal brightness of the first data and/or to a maximum brightness of the first data. A nominal brightness of the first data may be an average brightness of the representation of the road surface on which the vehicle is travelling. The average brightness may be calculated over the entire representation of the road surface. Alternatively, the average brightness may be calculated over a limited area of the road surface. The former alternative may allow a more robust determination of a nominal brightness, which is less influenced by local brightness variations of the road surface. The latter alternative may reduce computational resources required for determining the nominal brightness of the road surface. The maximum brightness of the first data indicative of the road surface may for example be a brightness of a lane marking on the road surface. Relying on a maximum brightness or on a nominal brightness in a comparison to the brightness threshold limit may again reduce the requirements for computational resources. By comparing the brightness threshold limit to a nominal brightness of the first data and/or to a maximum brightness of the first data, a degree of deviation in brightness of the portion of the first data representing the interior of the depression to the brightness of the road surface may be obtained. This allows for precisely and efficiently estimating the geometric properties of the depression in the road surface.

In an example, the at least one brightness threshold and/or the brightness threshold limit is defined based on a nominal brightness of the first data. This means that the at least one brightness threshold may be defined as a percentage of the nominal brightness of the first data. This way, brightness thresholds that are unlikely to cause the depression in the road surface to be not visible in the binary image anymore can a priori be excluded from the thresholding technique. This again increases computational efficiency.

In an example, obtaining second data further comprises obtaining third data indicative of at least one shadow on the road surface. Obtaining third data indicative of at least one shadow on the road surface comprises determining if there is an object higher than a predefined height within a distance to the road surface that is inferior to a predefined distance threshold. Obtaining the third data also comprises obtaining a position of the sun relative to the determined object. If the position of the sun, the position of the determined object and a portion of the surface of the road lie on a straight line, it is determined that there is at least one shadow on the road surface. Considering third data, thus, further increases the accuracy and robustness of an estimation of the geometric property of the depression.

In an example, the third data is indicative of at least one shadow on the depression in the road surface. For this, also a position of the depression in the road surface is determined based on the first data. If the position of the sun, the position of the determined object within a distance to the road surface inferior to a predefined distance threshold and the position of the depression lie on a straight line, it is determined that there is at least one shadow on the depression in the road surface. In such a case, the nominal brightness of the first data and/or the maximum brightness of the first data, to which the brightness threshold limit is compared, may be determined based on a brightness of a portion of the first data indicative of a region in close vicinity of the depression in the road surface, i.e. being affected by the shadow. Close vicinity of the depression in the road surface may be defined by a predefined vicinity threshold to the center of the depression in the road surface or to an edge of the depression in the road surface. The predefined vicinity threshold may, for example, be 1 meter, 50 centimeters or 25 centimeters. This increases the accuracy in the estimation of a geometric property of the depression in the road surface despite the fact that there is a shadow on the depression.

In an example, the third data is indicative of water on the road surface and/or water located directly adjacent to the road surface. The third data indicative of water may be directly obtained from the first data. However, it may also be obtained from a weather forecast for an area for which the method is executed or from a report on weather conditions that have been present in an area for which the method is executed. If a weather forecast announces rain within a predefined forecast period, it is inferred that there already is water on or adjacent to the road surface. The predefined forecast period may, for example, be 30 minutes, 15 minutes or 10 minutes. If a report on weather conditions that have been present in an area for which the method is executed reports that a rainfall event has occurred within a predefined reporting period, it is inferred that there is still water on or adjacent to the road surface. The predefined reporting period may, for example, be 2 days, 1 day or 6 hours. In case the third data is indicative of water on or adjacent to the road surface, the method for estimating a geometric property of a depression in a road surface may be abandoned. This eliminates or at least reduces the risk of water being misinterpreted as a depression in the road surface.

In an example, the method further comprises classifying the second data. The classification may be done based on the brightness of the at least one portion of the first data representing the interior of the depression or the brightness threshold or the brightness threshold limit. The brightness of the at least one portion of the first data representing the interior of the depression may be compared to a maximum possible brightness of the first data, to a maximum brightness that is present in the first data or to a nominal brightness of the first data. In case third data indicates that there is at least one shadow on the depression or in the vicinity of the depression, the classification of the second data may be based on a relation of the brightness of the at least one portion of the first data representing the interior of the depression to a nominal brightness or to a maximum brightness of the first data indicative of the region in close vicinity to the depression in the road surface. In any case, the second data may be classified into different categories indicative of the depth of the depression. For example, the depression may be classified as low depth if the brightness of the at least one portion of the first data representing the interior of the depression is comparatively high, e.g. higher than or equal to 75 % of the nominal or maximum brightness of the first data. The depression may be classified as medium depth if the brightness of the at least one portion of the first data representing the interior of the depression is medium, e.g. between 75 % and 40 % of the nominal or maximum brightness of the first data. The depression may be classified as great depth if the brightness of the at least one portion of the first data representing the interior of the depression is comparatively low, e.g. below or equal to 40 % of the nominal or maximum brightness of the first data. Alternatively, finder or rougher classifications may be based on percentage intervals of the nominal or maximum brightness of the first data. Based on the classification, a vehicle has a good basis to determine an appropriate reaction to a depression in the road surface that mitigates damages to the vehicle and/or undesired effects on the driving behavior while at the same time keeping any disturbance to other traffic participants as little as possible.

In an example, classifying the second data is based on one or more of a vehicle type information, a driving parameter, and a vehicle occupant parameter. A vehicle type information may characterize a type of a vehicle, e.g. a passenger vehicle or a commercial vehicle. Alternatively, the type of a vehicle may relate to a sedan, a pickup or a truck. A sedan vehicle may be more susceptible to damage or undesired effects on the driving behavior resulting from a depression in a road surface than a pickup. Similarly, the pickup may be more susceptible to damage or undesired effects on the driving behavior resulting from a depression in a road surface than a truck. Due to this, a given depression in a road surface having a given depth may, for example, be classified as low depth for a truck, as medium depth for a pickup and as great depth for a sedan vehicle. A driving parameter may relate to a travelling speed of the vehicle. In this context, a vehicle travelling at high speed may be more susceptible to damage or undesired effects on the driving behavior resulting from a depression in a road surface than a vehicle traveling at low speed. Thus, a given depression in a road surface of a given depth may be classified as low depth if the vehicle is travelling at a comparatively low speed, e.g. below or equal to 20 kilometers per hour. The same depression may be classified as medium depth if the vehicle is travelling at medium speed, e.g. between 20 kilometers per hour and 100 kilometers per hour. Moreover, the same depression may be classified as great depth if the vehicle is travelling at comparatively high speed, e.g. 100 kilometers per hour or more. The vehicle occupant parameter is understood to describe how many passengers the vehicle is carrying. The more passengers a vehicle is carrying, the higher the potential disturbance by an undesired effect on the driving behavior resulting from a depression in the road surface. Hence, a given depression in the road surface of a given depth may be classified as low depth if the vehicle is carrying a comparatively low number of passengers, e.g. only one person. The same depression may be classified as medium depth if the vehicle is carrying a medium number of passengers, e.g. two or three passengers. Eventually, the same depression may be classified as great depth if the vehicle is carrying a comparatively large number of passengers, e.g. four or more passengers. Based on the described refined classification, an accurate and reliable basis may be provided to a vehicle for determining an appropriate reaction to a depression in the road surface.

In an example, the method further comprises providing an assistance request to an entity external to the vehicle. The entity external to the vehicle may be another vehicle and/or an infrastructure element, both comprising means for estimating a geometric property of a depression in a road surface. Additionally or alternatively, the entity external to the vehicle may be a cloud server to which the vehicle is linked. The cloud server may comprise a database on locations and geometric properties of depressions in road surfaces. The vehicle may provide the assistance request in addition to its own estimation of the geometric property of the depression in the road surface, i.e. the method of the present disclosure may be executed by the vehicle or from the perspective of the vehicle and, additionally, the assistance request may be provided. This may be particularly helpful if a certainty and/or accuracy of a geometric property estimation of the vehicle is low, for example if there is a shadow on the depression or if the distance between the vehicle and the depression is comparatively large, for example more than 50 meters. Upon receipt of the assistance request, the external entity sends its estimation or stored value of a geometric property of the depression in the road surface to the vehicle. The estimation of the geometric property of the depression in the road surface of the vehicle may be overridden with the estimation of the geometric property of the depression in the road surface originating from the entity external to the vehicle. This may particularly be the case when the entity external to the vehicle is closer to the depression in the road surface than the vehicle. Thus, certainty and/or accuracy of a geometric property estimation of the depression in the road surface can be increased. The estimation of the geometric property of the depression in the road surface of the vehicle may also be overridden with the estimation of the geometric property of the depression in the road surface originating from the entity external to the vehicle if the estimation from the entity external to the vehicle indicates a depression of greater dimensions. Thus, if in doubt, the vehicle has an appropriate basis to adapt its reaction to the depression in the road surface in a way to be on the safe side.

According to a second aspect, there is provided a method for controlling a vehicle. The method comprises:
- determining a geometric property of a depression in a road surface in a surrounding of the vehicle using the method of the first aspect, and
- triggering a depression mitigation action based on the geometric property and/or providing the geometric property to an entity external to the vehicle.
The depression mitigation action may involve an evasive driving maneuver in order to avoid driving over the depression of the road surface or a collision with another vehicle that tries to avoid the depression. Additionally or alternatively, the driving maneuver may comprise a braking and/or a steering action. The steering action may be as such that the vehicle performs a lane change. Thus, damages to the vehicle due to the depression in the road surface may be prevented or at least reduced. Moreover, an undesired effect on the driving behavior is avoided or at least reduced. The geometric property of the depression in the road surface may be provided to an entity external to the vehicle. In this context, the entity external to the vehicle may be another vehicle or an infrastructure element. Thus, the geometric property of the depression may be provided to the other vehicle if the other vehicle is travelling towards the depression in the road surface whose geometric property the vehicle has estimated. Also if the geometric property is provided to an infrastructure element, the geometric property may be provided to other vehicles via the infrastructure element. Preferably, the geometric property may be provided to the other vehicle or the infrastructure element if a depth of the depression in the road surface has been classified as medium depth or great depth. The associated classification may also be provided to the other vehicle and/or the infrastructure element. Additionally or alternatively, a warning may be derived from the geometric property and the warning may be provided to the other vehicle or the infrastructure element. The warning may be provided directly to a driver of the other vehicle, e.g. by honking, flashing lights or an electromagnetic signal that causes a warning message to be displayed to the driver on a screen of the other vehicle or a warning sound that is played to the driver of the other vehicle from an interior of the other vehicle. If the other vehicle is an autonomously driving vehicle, the electromagnetic signal provided to the other vehicle may also cause the other vehicle to change its driving behavior, e.g. to brake, to perform a lane change or to abort a lane change. The entity external to the vehicle may also be a cloud server. This may mean that the warning as explained above or the geometric property is provided to the other vehicle via the cloud server. It may also mean that information on the location and on the geometric property of the depression in the road surface is stored on the cloud server and not immediately distributed to another vehicle. In this case, the information on the geometric property of the depression in the road surface may be distributed to the other vehicle on-demand once the other reaches an area in the surroundings of the depression in the road surface. The warning, whether provided directly to the other vehicle or indirectly via a cloud server, instantaneously or on-demand, mitigates a risk of damages to the other vehicle due to the depression in the road surface. Furthermore, said warning contributes to road safety since sudden driving maneuvers of the other vehicle, which may not be expected by other traffic participants, may be avoided.

In an example, triggering a depression mitigation action is further based on one or more of a vehicle type information, a driving parameter, and a vehicle occupant parameter. A vehicle type information may characterize a type of a vehicle, e.g. a passenger vehicle or a commercial vehicle. Alternatively, the type of a vehicle may relate to a sedan, a pickup or a truck. A sedan vehicle may be more susceptible to damage or undesired effects on the driving behavior resulting from a depression in a road surface than a pickup. Similarly, the pickup may be more susceptible to damage or undesired effects on the driving behavior resulting from a depression in a road surface than a truck. Due to this, a depression mitigation action executed as a reaction to a depression in a road surface of a given geometry may be little aggressive for a truck, more aggressive for a pickup and even more aggressive for a sedan vehicle. A driving parameter may relate to a travelling speed of the vehicle. In this context, a vehicle travelling at high speed may be more susceptible to damage or undesired effects on the driving behavior resulting from a depression in a road surface than a vehicle traveling at low speed. Thus, a depression mitigation action due to a depression in a road surface of a given geometry, e.g. depth, may be less aggressive if the vehicle is travelling at comparatively low speed, e.g. below or equal to 20 kilometers per hour. The depression mitigation action may be more aggressive if the vehicle is travelling at medium speed, e.g. between 20 kilometers per hour and 100 kilometers per hour. Moreover, the depression mitigation action may be even more aggressive if the vehicle is travelling a comparatively high speed, e.g. at 100 kilometers an hour or more. The vehicle occupant parameter is understood to describe how many passengers the vehicle is carrying. The more passengers a vehicle is carrying, the higher the potential disturbance by an undesired effect on the driving behavior resulting from a depression in the road surface. Hence, a depression mitigation action due to a given depression in the road surface of a given geometric property may be less aggressive if the vehicle is carrying comparatively few passengers, e.g. only one person. A depression mitigation action due to the same depression may be more aggressive if the vehicle is carrying a medium number of passengers, e.g. two or three passengers. Eventually, a depression mitigation action due to the same depression may be even more aggressive if the vehicle is carrying a comparatively large number of passengers, e.g. four or more passengers. A less aggressive or little aggressive mitigation action may be a steering action without performing a lane change. A more aggressive mitigation action may be a lane change or a braking action. An even more aggressive mitigation action may be a lane change including a braking action. Based on one or more of the vehicle type information, the driving parameter and the vehicle occupant parameter, an even more appropriate depression mitigation action may be determined that ensures vehicle safety while at the same time causing as little disturbance to other traffic participants as possible.

According to a third aspect, there is provided a data processing apparatus comprising means for carrying out the method of the first aspect and/or the method of the second aspect. Thus, the data processing apparatus may be configured to carry out all of the method of the first aspect and the method of the second aspect. Alternatively, the data processing apparatus may be configured to carry out one of the method of the first aspect and the method of the second aspect. The data processing apparatus may be attached to or housed in a vehicle and/or in an entity external to the vehicle. The entity external to the vehicle may be another vehicle, an infrastructure element or a cloud server. Hence, in the latter case, the data processing apparatus puts the vehicle in a position so that the method according to the first aspect and/or the method according to the second aspect can be executed from its perspective. Using such a data processing apparatus, an estimation of a geometric property of a depression in a road surface in a surrounding of a vehicle may be estimated in a reliable manner. This helps in providing a basis for an appropriate reaction of the vehicle to the depression in the road surface. Additionally or alternatively an appropriate reaction of the vehicle to the depression in the road surface may be determined. Altogether, road safety is enhanced.

According to a fourth aspect, there is provided a computer program comprising instructions which, when the program is executed by a computer, cause the computer to carry out the method of the first aspect and/or the method of the second aspect. Thus, the computer program may be configured to cause the computer to carry out all of the method of the first aspect and the method of the second aspect. Alternatively, the computer program is configured to cause the computer to carry out one of the method of the first aspect and the method of the second aspect. Using such a computer program, an estimation of a geometric property of a depression in a road surface in a surrounding of a vehicle may be estimated in a reliable manner. Having an information available indicating a geometric property of a depression in a road surface enhances road safety since an appropriate response of a vehicle to the depression may be determined based thereon. This causes as little disturbance to other traffic participants as possible and enhances road safety.

According to a fifth aspect, there is provided a computer-readable storage medium comprising instructions which, when executed by a computer, cause the computer to carry out the method of the first aspect and/or the method of the second aspect. Thus, the computer-readable storage medium may be configured to cause the computer to carry out all of the method of the first aspect and the method of the second aspect. Alternatively, the computer-readable storage medium is configured to cause the computer to carry out one of the method of the first aspect and the method of the second aspect. Using such a computer-readable storage medium, an estimation of a geometric property of a depression in a road surface in a surrounding of a vehicle may be provided in a reliable manner. Having an information available indicating a geometric property of a depression in a road surface enhances road safety since an appropriate response of a vehicle to the depression that causes as little disturbance to other traffic participants as possible can be determined.

The method of the first aspect and/or the method of the second aspect may be at least partly computer-implemented, and may be implemented in software or in hardware, or in software and hardware. Further, the method of the first aspect and/or the method of the second aspect may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle in a first traffic scenario, wherein the vehicle comprises a data processing apparatus according to the present disclosure for executing a method according to the present disclosure for estimating a geometric property of a depression in a road surface and for executing a method according to the present disclosure for controlling a vehicle,
- Figure 2a: shows an exemplary grayscale image captured by an environment detection sensor of the vehicle in the first traffic scenario as shown in Figure 1,
- Figure 2b: shows the exemplary grayscale image from Figure 2a having been cropped to a portion that only shows a road surface comprising a depression and other vehicles travelling on the road,
- Figure 2c: shows a binary image originating from a discretization of the grayscale image of Figure 2b,
- Figure 2d: shows another binary image originating from a discretization of the grayscale image of Figure 2b,
- Figure 3: shows the same first traffic scenario as illustrated in Figure 1 but from a bird's eye view, wherefrom it becomes apparent that the depression in the road surface is additionally detected by another vehicle on the left lane,
- Figure 4a: shows a first stage of a second traffic scenario in which a depression in a road surface ahead of another vehicle on the right lane is detected by a vehicle on the middle lane,
- Figure 4b: shows a second stage of the second traffic scenario of Figure 4a in which the other vehicle on the right lane performs a lane change and the vehicle on the middle lane also performs a lane change as a depression mitigation action, and
- Figure 5: schematically shows steps of the method according to the present disclosure for estimating a geometric property of a depression in a road surface and steps of the method according to the present disclosure for controlling a vehicle.

### DETAILED DESCRIPTION

The Figures are merely schematic representations and serve only to illustrate examples of the disclosure. Identical or equivalent elements are in principle provided with the same reference signs.

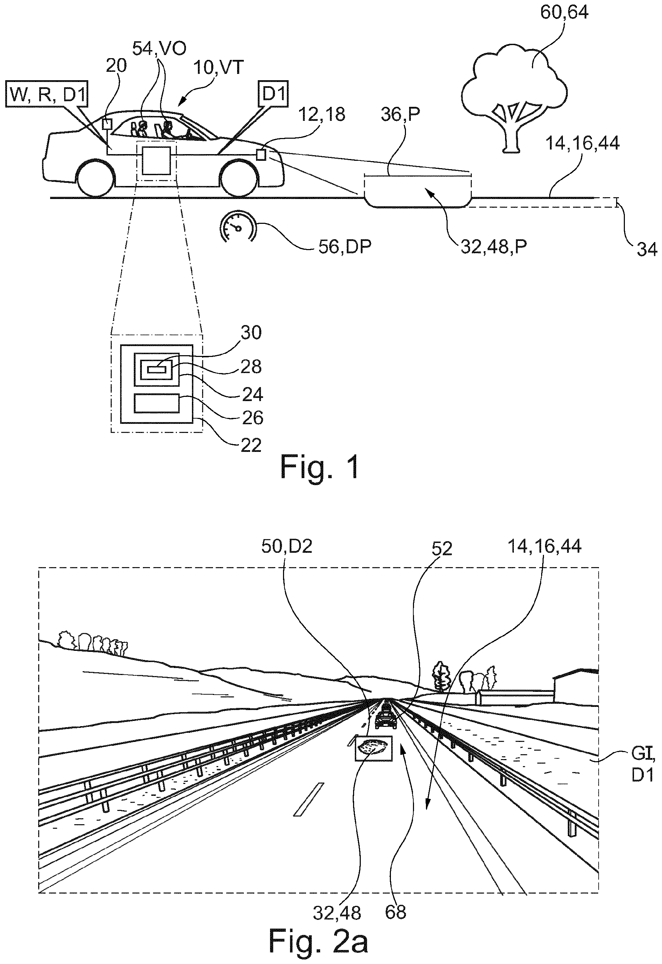

Figure 1 shows a vehicle 10.

In its front, the vehicle 10 comprises an environment detection sensor 12 for providing first data D 1 indicative of a road surface 14 of a road 16 on which the vehicle 10 is travelling.

In the present example, the environment detection sensor 12 comprises an optical camera 18. Thus, the first data D1 may be an image and/or a video sequence comprising a representation of the road surface 14.

Additionally or alternatively, the environment detection sensor 12 may comprise a lidar unit.

Of course, there may be more environment detection sensors 12 in the vehicle 10, which may also be situated in the rear or at the sides of the vehicle 10. However, for the ease of representation, only one environment detection sensor 12 is shown in the vehicle of Figure 1. This environment detection sensor 12 is representative for all environment detection sensors 12 of the vehicle 10.

The vehicle 10 also comprises a communication interface 20.

The communication interface 20 may be a loudspeaker, a light such as a warning light, headlights of the vehicle 10, the horn of the vehicle 10 or an electromagnetic communication means such as an antenna for Bluetooth, Wi-Fi or mobile communications. In Figure 1, the communication interface 20 is only represented schematically.

Furthermore, the vehicle 10 comprises a data processing apparatus 22.

The data processing apparatus 22 is communicatively connected to the environment detection sensor 12 and to the communication interface 20.

The data processing apparatus 22 comprises a data storage unit 24 and a data processing unit 26.

The data storage unit 24 comprises a computer-readable storage medium 28.

On the computer-readable storage medium 28, there is provided a computer program 30.

The computer program 30 and, thus, also the computer-readable storage medium 28, comprise instructions which, when executed by the data processing unit 26, or, more generally speaking, a computer, cause the computer or the data processing unit 26 to carry out a method for estimating a geometric property P of a depression 32 in a road surface 14 and a method for controlling a vehicle 10.

Consequently, the data storage unit 24 and the data processing unit 26 form means for carrying out the method for estimating a geometric property P of a depression 32 in a road surface 14 and for carrying out the method for controlling the vehicle 10.

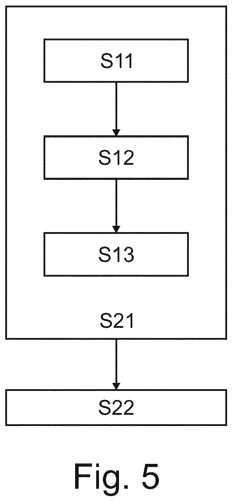

As will be described in more detail further below with reference to Figure 5, the method for estimating a geometric property P of a depression 32 in a road surface 14 forms part of the method for controlling a vehicle 10.

Still with reference to Figure 1, the vehicle 10 is travelling on a road 16 with a road surface 14.

The road surface 14 comprises a depression 32.

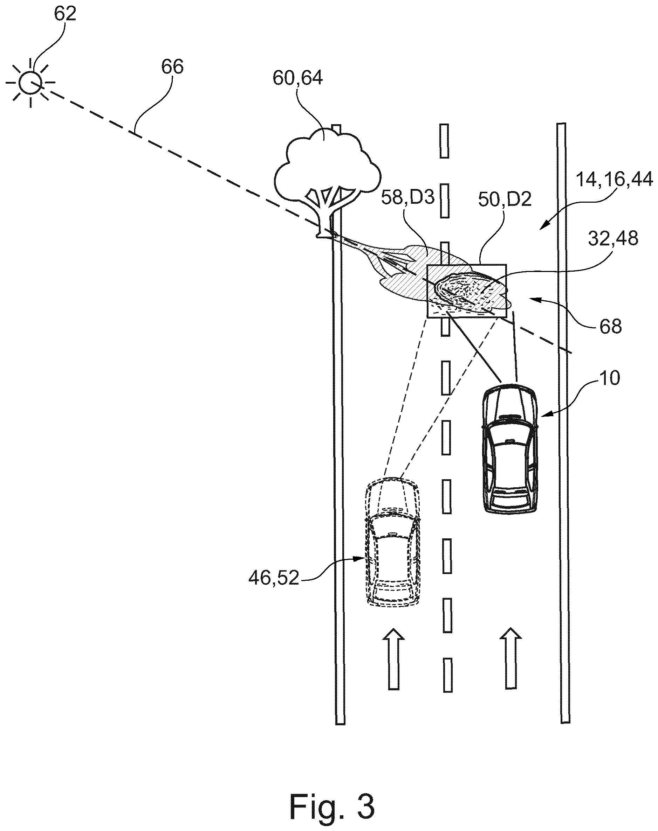

As shown in figure 1 Figure 3, the depression 32 has a depth 34, a width 40, a length 36 and a diameter 38.

The depth 34, the width 40, the length 36 and the diameter 38 are geometric properties of the depression 32.

The vehicle 10, more precisely the data processing apparatus 22 of the vehicle 10, executes the method for controlling a vehicle 10.

A first step S21 of the method for controlling the vehicle 10 comprises determining a geometric property P of the depression 32 in the road surface 14. To this end, the method for estimating a geometric property P of the depression 32 in the road surface 14 is executed. The steps of this method will be designated with reference signs S1x in order to distinguish these steps from the steps of the method for controlling the vehicle 10 which are indicated by reference signs S2x.

In the present example, the estimated geometric property P of the depression 32 is the depth 34 of the depression 32.

At the data processing apparatus 22 of the vehicle 10, first data D 1 indicative of the road surface 14 comprising the depression 32 and the circumference of the depression 32 is obtained through the environment detection sensor 12. This constitutes a first step S 11 of the method for estimating a geometric property P of the depression 32.

In the present example, the circumference of the depression 32 is determined based on the data provided by the environment detection sensor 12 in that an object recognition technique is applied to this data. Thus, using the determined circumference of the depression 32, the data received from the environment detection sensor 12 may be subdivided into a portion representing the portion of the road surface 14 located outside the depression 32 and a portion representing the portion of the road surface 14 inside the depression 32, i.e. an interior of the depression 32.

Subsequently, in a second step S12 of the method for estimating a geometric property P of the depression 32, second data D2 is obtained. This is done based on the first data D1.

The second data D2 is indicative of a brightness of at least a portion of the first data D1 representing an interior of the depression 32.

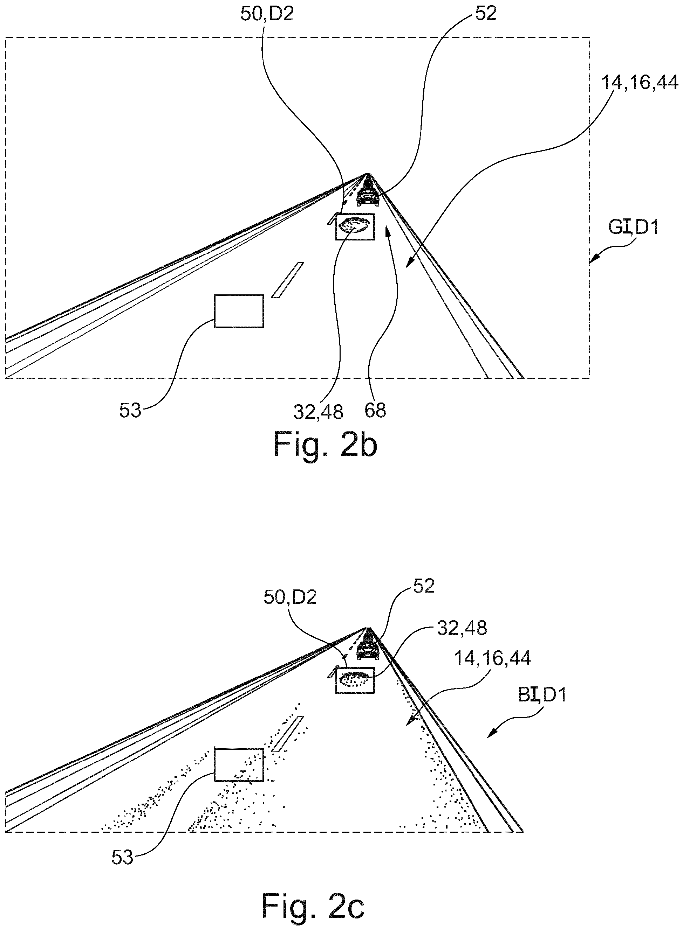

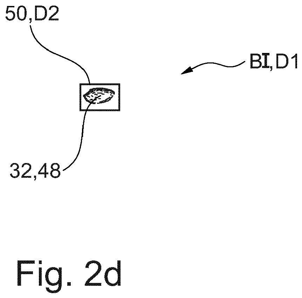

The second step S12 will be explained in more detail with reference to Figures 2a, 2b, 2c and 2d. These figures illustrate steps of a thresholding technique that is applied to estimate a geometric property P of the depression 32, in the present example the depth 34 of the depression 32.

In the present example, the first data D1 comprises a color image or a sequence of color images. In a first sub-step of the second step S12 the color image is transformed into a grey scale image (cf. Figure 2a).

The grayscale image GI still shows the depression 32 on the lane 44 on which the vehicle 10 is travelling. In the present example, the depression 32 is a pothole 48.

In the grayscale image GI, the pothole 48 is marked by a bounding box 50. In the present example, the bounding box 50 is a result of the above-mentioned object recognition technique applied to the data provided by the environment detection sensor 12.

More precisely, the object recognition technique comprises using a convolutional neural network that has been trained to detect potholes 48 in images.

In a second sub-step of the second step S12, an average brightness of the grayscale image GI is determined. In this context, the average brightness may also be called nominal brightness.

Additionally or alternatively, it is also conceivable that a lidar sensor detects the pothole in the surface 14 of the road 16 on which the vehicle 10 is travelling. If a lidar sensor detects the pothole 48, the data from the lidar sensor and the image data from the optical camera 18 need to be fused. In this context, fusing means finding a region in the image data that corresponds to an area in the lidar data in which the pothole 48 has been detected.

In a subsequent sub-step of the second step S12, the grayscale image GI is cropped.

In the present example, this means that all portions relating to surroundings of the road 16 are cut off. In other words, the cropped greyscale image GI only comprises a representation of the surface 14 of the road 16 on which the vehicle 10 is travelling and other vehicles 52 travelling on the same road 16. Such a cropped image is shown in Figure 2b.

The pothole 48 is still marked by the bounding box 50.

In a next step, the greyscale image GI is discretized. More precisely, the greyscale image GI is binarized in order to obtain a black-and-white image or binary image BI.

Figure 2c shows such a discretized image DI originating from the grayscale image GI of Figure 2b.

The binary image BI of Figure 2c is obtained from the grayscale image GI of Figure 2b by applying a brightness threshold to the image of Figure 2b. The brightness threshold applied in the present example is the average brightness or nominal brightness of the grayscale image GI of Figure 2b. This brightness threshold may also be called an average threshold or a nominal threshold. For reasons of better understanding, another bounding box 53 marking an area with bright and dark portions directly adjacent to each other is drawn into the grayscale image GI of Figure 2b. For the present example, it shall be assumed that the nominal brightness within this bounding box 53 is also the nominal brightness of the grayscale image GI of Figure 2b as a whole.

Applying the brightness threshold means the following: If a greyscale value or brightness value of a pixel of the grayscale image GI of Figure 2b equals or exceeds the nominal threshold, a brightness value of that respective pixel is set to one in the binary image BI of Figure 2c. In other words, this pixel will appear in white. If a greyscale value or brightness value of a pixel of the grayscale image GI of Figure 2b is lower than the nominal threshold, the brightness value of that respective pixel is set to zero in the binary image BI of Figure 2c. In other words, this pixel will appear in black.

The second step S12 comprises applying a plurality of brightness thresholds.

In order to illustrate this, Figure 2d shows a binary image BI originating from the grayscale image GI of Figure 2b. The difference with respect to the binary image BI of Figure 2c is that the binary image BI of Figure 2d was created by applying a brightness threshold that is higher than the nominal threshold determined from the grayscale image GI of Figure 2b. It can be observed that most features that are visible in the binary image BI of Figure 2c are not visible any more in the binary image BI of Figure 2d. However, the representation of the pothole 48 is still visible.

One or more further binary image BI may be obtained by applying another brightness threshold to the grayscale image GI of Figure 2b that is even higher than the brightness threshold that was applied to obtain the binary image BI of Figure 2c. The brightness threshold at which the pothole 48 is still visible before it is not visible any more at the next brightness threshold is called brightness threshold limit.

Thus, the brightness threshold limit defines a brightness associated with switching between visibility and non-visibility of the interior of the representation of the interior of the depression 32, in the present example the pothole 48.

Applying different brightness thresholds, e.g. in ascending or descending order, may be called a sweeping procedure or simply sweeping.

Thereafter, in a third step S13, the geometric property P of the depression 32 is estimated based on the second data D2, i.e. on the data indicative of the brightness of the portion of the first data D1 representing the interior of the depression. In the present example, the geometric property P is estimated based on the brightness threshold limit.

The brightness threshold limit is compared to the nominal brightness of the grayscale image GI of Figure 2b. Additionally or alternatively, the brightness threshold limit may also be compared to the maximum brightness of the grayscale image GI of Figure 2b. In the present example, the determined brightness threshold limit is normalized to the nominal brightness. Consequently, if the determined brightness threshold limit equals the nominal brightness, the determined brightness threshold limit may be associated with 100%. In case the determined brightness threshold limit exceeds the nominal brightness, the determined brightness threshold may be associated with a percentage above 100%. If the determined brightness threshold limit is lower than the nominal brightness, the determined brightness threshold may be associated with a percentage below 100%.

Based on this comparison, a geometric property P of the pothole 48 may be estimated and classified into different categories.

In the present example, it is determined that the brightness threshold limit is 125 % of the nominal brightness of the grayscale image GI of Figure 2b. This causes the pothole 48 to be classified in a category relating to potholes 48 of low depth.

In more detail, as long as the brightness threshold limit is 125% or less of the nominal brightness of the grayscale image GI of Figure 2b, the pothole 48 may be classified as low depth. If the brightness threshold limit is between 125 % and 150 % of the nominal brightness of the grayscale image GI of Figure 2b, the pothole 48 may be classified as medium depth. If the brightness threshold limit is equal to or above 150 % of the nominal brightness of the grayscale image GI of Figure 2b, the pothole 48 may be classified as great depth.

The classification or categorization of the brightness threshold limit, i.e. the second data D2 is based on a vehicle type information VT, a driving parameter DP, and a vehicle occupant parameter VO. In other words, the above defined classes are a function of the vehicle type information VT, the driving parameter DP, and the vehicle occupant parameter VO.

The vehicle type information VT may be stored on the data storage unit 24 of the vehicle 10, more precisely on the computer-readable storage medium 28. The driving parameter DP may be determined by one or more sensors of the vehicle 10, in the present example by a speedometer or GPS. The vehicle occupant parameter VO may relate to a number of occupants. This may be determined based on signals provided by pressure sensors arranged below the seats of the vehicle 10 or from a number of closed seatbelts. The latter may be determined using one or more seat belt sensors or a camera.

In the example of Figure 1, the type of the vehicle 10 is a sedan vehicle. Sedan vehicles are rather susceptible to damage resulting from traveling over a depression 32 in a road surface 14. The above-mentioned intervals of the normalized brightness threshold limit apply for sedan vehicles. For a pickup vehicle or a truck, these intervals may be amended since such vehicles are more robust as compared to sedan vehicles and, thus, are less susceptible to damage resulting from traveling over a depression 32.

Furthermore, it is assumed that the vehicle 10 of Figure 1 is travelling at a speed 56 of 120 kilometers per hour, which is understood as an example of a driving parameter DP. The faster a vehicle 10 is travelling, the higher the risk of damage when traveling over a depression 32 in the road surface 14. The above-mentioned intervals of the normalized brightness threshold limit apply to the travelling speed 56 of the vehicle 10 of Figure 1. These intervals may be modified for different speeds.

Moreover, it is assumed that the vehicle 10 of Figure 1 carries two occupants 54. The number of occupants is an example of the vehicle occupant parameter VO. The more passengers 54 a vehicle 10 carries, the higher the potential impact on driving comfort for the occupants 54 when traveling over a depression 32 in the road surface 14. The above-mentioned intervals of the normalized brightness threshold limit apply to the vehicle occupant parameter VO, i.e. to a vehicle 10 having two occupants 54. These intervals may be modified for a different number of occupants 54.

Based on the vehicle type information VT, the driving parameter DP and the vehicle occupant parameter VO, the depression 32, i.e. the pothole 48, of the present example is classified as a hazard for the vehicle 10 of Figure 1.

Consequently, the vehicle 10 then triggers a depression mitigation action A. this constitutes a second step S22 of the method for controlling the vehicle 10.

In the present case, the depression mitigation action A comprises reducing the travelling speed 56 of the vehicle 10 by braking.

Additionally or alternatively, the depression mitigation action may comprise a steering action SA or the performance of a lane change LC.

Further additionally or alternatively, the depression mitigation action A may comprise providing a warning W to another vehicle 52 or other traffic participants. This warning W may be provided directly to the other vehicle 52 or the other traffic participants or indirectly via a cloud server. Consequently, the other vehicle 52 may adapt its driving behavior to the depression 32.

The vehicle 10 may also provide a geometric property P and/or a location of the depression 32, i.e. the pothole 48, to the cloud server. If another vehicle 52 reaches this location, it may be warned of the pothole 48 depending on its vehicle type VT, its driving parameter DP and its vehicle occupant parameter VO.

Figure 3 shows the same traffic scenario as Figure 1 but from a bird's eye view. In the example of Figure 3, obtaining second data D2 further comprises obtaining third data D3 indicative of at least one shadow 58 of an object 60 on the road surface 14 is explained. This is an option.

In Figure 3, a shadow 58 of an object 60 falls right onto the pothole 48.

The data processing apparatus 22 of the vehicle 10 that travels on the right lane 44 of the road determines that a shadow 58 falls onto the pothole 48 by comparing a position of the sun 62, a position of the object 60 adjacent to the road 16 and a position of the pothole 48.

In the present example, the object 60 is a tree 64.

The position of the sun 62 may be determined using the environment detection sensor 12 or by using data indicative of the position of the sun 62 provided by a suitable data provider, e.g. provider of weather data.

The sun 62, the tree 64 and the pothole 48 lie on a straight line 66. This way, the data processing apparatus 22 of the vehicle 10 travelling on the right lane 44 determines that a shadow 58 falls onto the pothole 48 in the road surface 14.

In such a case, the brightness threshold limit is compared to a nominal brightness or a maximum brightness of the road surface 14, wherein the nominal brightness or the maximum brightness is determined in close vicinity of the pothole 48, e.g. inside the bounding box 50. This allows adjusting the first method to an a priori darker interior of the pothole 48, which is due to the shadow 58 that falls onto the pothole 48.

Figure 3 also shows another vehicle 52 which is travelling on the left lane 44 of the road 16.

Due to the shadow 58 that falls onto the pothole 48, the data processing apparatus 22 of the vehicle 10 that travels on the right lane 44 may not be certain about the estimated depth 34 of the pothole 48. This is why the vehicle 10 travelling on the right lane 44 may provide an assistance request R to the other vehicle 52 that travels on the left lane 44.

The other vehicle 52 travelling on the left lane 44 may execute the method for estimating a geometric property P of a depression 32, i.e. the pothole 48, as has been explained above and may classify the depth 34 of the pothole 48.

In the present example, the classification may relate to a medium depth.

The classification from the other vehicle 52 may be sent to and received at the vehicle 10 travelling on the right lane 44. The data processing apparatus 22 of the vehicle 10 travelling on the right lane 44 may thereupon override its own classification of the depth 34 of the pothole 48, which was low depth. This means that the data processing apparatus 22 uses the classification relating to medium depth. Consequently, the first vehicle 10 may apply a more aggressive depression mitigation action A. In the present case, this could be a moderate steering action SA to the right in order that the vehicle 10 may pass by the pothole 48 through the space 68 available between the pothole 48 and the right lane marking of the road 16.

Due to the fact that sending an assistance request to the other vehicle 52 is optional and subject to the presence of the other vehicle 52, the other vehicle is represented in dashed lines in Figure 3.

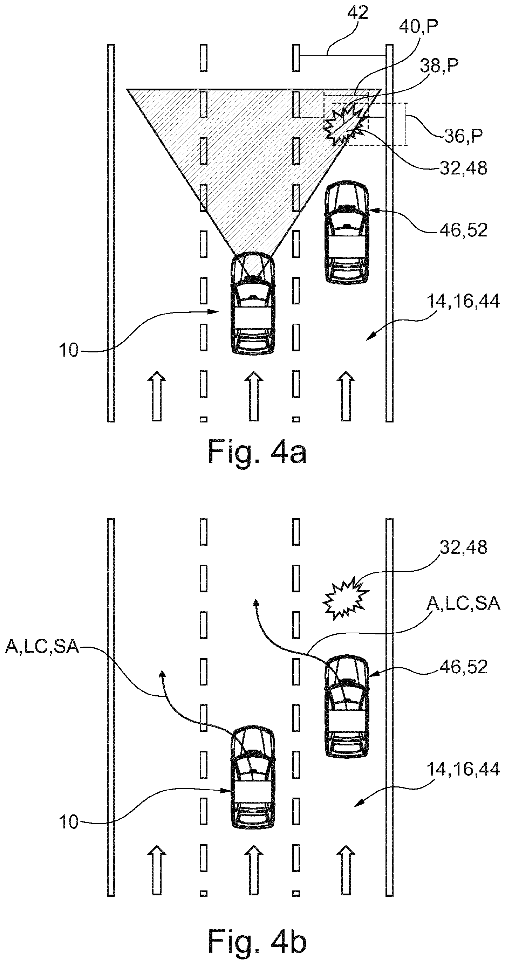

Figure 4a shows a first step of a second traffic scenario. In this traffic scenario, the vehicle 10 is travelling on the middle lane 44 of three lanes 44 of the road 16. Another vehicle 52 is travelling on the right lane 44 of the road 16. Ahead of the other vehicle 52, there is a pothole 48 in the surface 14 of the road 16.

The vehicle 10 travelling on the middle lane 44 executes the method for estimating a geometric property P of a depression 32 in a road surface. Thus, the vehicle 10 detects the pothole 48 that lies ahead of the other vehicle 52. Additionally, the data processing apparatus 22 of the vehicle 10 travelling on the middle lane 44 classifies the depth 34 of the detected pothole 48. In the present example, the depth is classified as elating to a great depth.

In anticipation of a lane change maneuver LC that the other vehicle 52 or a driver of the other vehicle 52 may perform, the vehicle 10 travelling on the middle lane 44 performs a lane change maneuver LC as depression mitigation action A even though there is no depression 32 in the road surface 14 lying directly ahead of the vehicle 10. This way, a potential collision with the other vehicle 52, which travels towards the pothole 48 lying directly ahead of it, is avoided. Thus, the other vehicle 52 may safely perform a lane change maneuver LC. Road safety is enhanced.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: environment detection sensor
- 14: road surface
- 16: road
- 18: optical camera
- 20: communication interface
- 22: data processing apparatus
- 24: data storage unit
- 26: data processing unit
- 28: computer-readable storage medium
- 30: computer program
- 32: depression
- 34: depth of depression
- 36: length of depression
- 38: diameter of depression
- 40: width of depression
- 42: width of lane
- 44: lane
- 46: entity external to vehicle
- 48: pothole
- 50: bounding box of pothole
- 52: other vehicle
- 53: bounding box for illustration of nominal brightness of image
- 54: occupant
- 56: travelling speed of vehicle
- 58: shadow
- 60: object
- 62: sun
- 64: tree
- 66: straight line
- 68: space between pothole and lane marking

- A: depression mitigation action
- BI: binary image
- DI: discretized image
- D1: first data
- D2: second data
- D3: third data
- DP: driving parameter
- GI: grayscale image
- LC: lane change
- P: geometric property
- R: assistance request
- SA: steering action
- VO: vehicle occupant parameter
- VT: vehicle type information
- W: warning

## Claims

1. A method for estimating a geometric property (P) of a depression (32) in a road surface (14) in a surrounding of a vehicle (10), the method comprising:
- obtaining first data (D1) indicative of the road surface (14) comprising the depression (32) and indicative of a circumference of the depression (32) (S 1 1),
- obtaining second data (D2) indicative of a brightness of at least a portion of the first data (D1) representing an interior of the depression (32), wherein the second data (D2) is obtained based on the first data (D1) (S12), and
- estimating a geometric property (P) of the depression (32) based on the second data (D2) (S13).

2. The method of claim 1, wherein the geometric property (P) is indicative of one or more of
- a depth (34) of the depression (32),
- a diameter (38) of the depression (32),
- a length (36) of the depression (32), and
- a width (40) of the depression (32).

3. The method of claim 1 or 2, wherein the first data (D1) is image data or lidar data.

4. The method according to any one of the preceding claims, wherein obtaining the second data (D2) comprises discretizing the first data (D1).

5. The method of any one of the preceding claims, wherein obtaining the second data (D2) comprises applying at least one brightness threshold to at least the portion of the first data (D1) representing an interior of the depression (32).

6. The method of claim 5, wherein obtaining the second data (D2) further comprises determining a brightness threshold limit, wherein the brightness threshold limit defines a brightness associated with switching between visibility and non-visibility of the interior of the representation of the interior of the depression (32) based on the first data (D1).

7. The method of claim 6, wherein estimating the geometric property (P) comprises comparing the brightness threshold limit to a nominal brightness of the first data (D1) and/or to a maximum brightness of the first data (D1).

8. The method of claims 5 to 7, wherein the at least one brightness threshold and/or the brightness threshold limit is defined based on a nominal brightness of the first data (D1).

9. The method of any one of the preceding claims, wherein obtaining second data (D2) further comprises obtaining third data (D3) indicative of at least one shadow (58) on the road surface (14).

10. The method of any one of the preceding claims, further comprising classifying the second data (D2).

11. The method of claim 10, wherein classifying the second data (D2) is based on one or more of a vehicle type information (VT), a driving parameter (DP), and a vehicle occupant parameter (VO).

12. The method of any one of the preceding claims, further comprising providing an assistance request (R) to an entity (46) external to the vehicle (10).

13. A method for controlling a vehicle (10), the method comprising:
- determining a geometric property (P) of a depression (32) in a road surface (14) in a surrounding of the vehicle (10) using the method of any of the preceding claims, and
- triggering a depression mitigation action (A) based on the geometric property (P) and/or providing the geometric property (P) to an entity (46) external to the vehicle (10).

14. The method of claim 13, wherein triggering a depression mitigation action (A) is further based on one or more of a vehicle type information (VT), a driving parameter (DP), and a vehicle occupant parameter (VO).

15. A data processing apparatus (22) comprising means for carrying out the method of any one of any one of claims 1 to 12 and/or the method of claim 13 or 14.

16. A computer program (30) comprising instructions which, when the program is executed by a computer, cause the computer to carry out the method of any one of claims 1 to 12 and/or the method of claim 13 or 14.

17. A computer-readable storage medium (28) comprising instructions which, when executed by a computer, cause the computer to carry out the method of any one of claims 1 to 12 or the method of claim 13 or 14.
